# EUROPEAN PATENT SPECIFICATION

(11) **EP 2 426 425 B1**
(45) Date of publication and mention of the grant of the patent: **22.04.2020**
(21) Application number: 09843976.3
(22) Date of filing: 27.04.2009
(51) Int. Cl.: F24F 12/00, F24F 13/22

(54) **HEAT EXCHANGING VENTILATOR**
WÄRMEAUSTAUSCHLÜFTUNG
VENTILATEUR D'ÉCHANGE DE CHALEUR

(43) Date of publication of application: 07.03.2012
(73) Proprietor: Mitsubishi Electric Corporation, Tokyo 100-8310 (JP)
(72) Inventor: FUJII, Yoshinori, Tokyo 102-0073 (JP); NARUSE, Yuuhei, Tokyo 102-0073 (JP); AOKI, Hiroki, Tokyo 100-8310 (JP); YASUE, Noriyuki, Tokyo 100-8310 (JP)
(74) Representative: Pfenning, Meinig & Partner mbB
(86) International application number: PCT/JP2009/058276
(87) International publication number: WO 2010/125632

(56) References cited:
- JP-A- 9 178 239
- JP-A- H09 178 239
- JP-A- 2003 074 936
- JP-A- 2003 074 936

## Description

### Field

The present invention relates to a heat exchanging ventilator that exchanges heat between supply air and discharge air while ventilating through an air supply and an air discharge.

### Background

A heat exchanging ventilator performs ventilation by blasting outdoor air, which is suctioned into an air supply path provided inside housing by an air supply fan, into an indoor space and discharging indoor air, which is suctioned into a discharge path in the housing by discharge fan, outside. The heat exchanging ventilator also performs heat exchange between the outdoor air (supplied air) flowing through the air supply path and the indoor air (discharge air) flowing through the discharge path using a heat exchanger. When the temperature of the outdoor air is lower than the indoor temperature, the outdoor air becomes warm by taking heat from the indoor air and then the warmed air is supplied into the indoor space. Meanwhile, when the temperature of the outdoor air is higher than the indoor temperature, the outdoor air loses the heat to the indoor air and thus the cooled air is supplied into the indoor space. In this manner, the ventilation may be performed at low cost.

In general, the heat exchanging ventilator is installed on the ceiling of a room, and thus the maintenance is conducted in the indoor space. For this reason, a component that requires maintenance during use, for example, a filter that removes dust in air is disposed at a lower portion of the heat exchanging ventilator. Further, a drain pan, which receives water caused when either the outdoor air or the indoor air is cooled by the other, is also disposed at the lower portion of the heat exchanging ventilator. In the heat exchanging ventilator, for example, as in the heat exchanging ventilator disclosed in Patent Literature 1, the housing thereof is composed of a body casing in which a ceiling portion and two side plate portions are integrally molded with each other, two side plates attached to the body casing, and a bottom plate attached to the body casing.

### Citation List

### Patent Literature

Patent Literature 1: Japanese Patent Application Laid-open No. JP 2003-74936 discloses a heat exchanging ventilator according to the preamble of claim 1.

### Summary

### Technical Problem

The maintenance of the heat exchanging ventilator installed on the ceiling of the room may be conducted in an unstable state, such as in a standing position on a pedestal. Accordingly, in recent years, there has been a demand for installation of the heat exchanging ventilator under the floor so that the maintenance work on the floor can be allowed. In the existing heat exchanging ventilator, because the component that usually requires maintenance is disposed at the lower portion of the heat exchanging ventilator as described above, installing the existing heat exchanging ventilator upside down, which is in reverse to the case of installation on the ceiling, makes it easier to conduct maintenance when the heat exchanging ventilator is installed under the floor.

However, if the existing heat exchanging ventilator is installed with the top and the bottom being reversed, it results in the drain pan being located at an upper portion in the housing. That is, the drain pan cannot be properly used for its original purpose. For this reason, the water caused when either the outdoor air or the indoor air is cooled by the other gathers inside the housing, and it may leak out of the heat exchanging ventilator through a gap between the body casing and the side plate over time, thereby damaging a building.

The invention is made in view of such circumstances, and it is an object to obtain a heat exchanging ventilator capable of preventing water from leaking when it is installed whichever of the ceiling and the floor of a room.

### Solution to Problem

A heat exchanging ventilator according to claim 1 is provided for solving the above mentioned technical problem.

### Advantageous Effects of Invention

In the heat exchanging ventilator of the invention, since the housing is configured by using the inner housing which is integrally molded in a box shape in which one face is open and the drain pan which is disposed near the open face of the inner housing, in either case where the heat exchanging ventilator is installed with the drain pan being present on a lower side or where the heat exchanging ventilator is installed with the drain pan being present on an upper side, water caused by dew condensation inside the housing may be retained in any one of the inner housing and the drain pan. Therefore, in the heat exchanging ventilator of the invention, the leakage of the water may be prevented in either case where the heat exchanging ventilator is installed in the ceiling or under the floor of the room.

### Brief Description of Drawings

FIG. 1 is a partially exploded perspective view schematically illustrating an example of a heat exchanging ventilator of the invention.
FIG. 2 is an exploded perspective view schematically illustrating the heat exchanging ventilator shown in FIG. 1.
FIG. 3 is a cross-sectional view schematically illustrating the heat exchanging ventilator shown in FIGS. 1 and 2.
FIG. 4 is a schematic diagram illustrating the flows of the outdoor air and the indoor air in the heat exchanging ventilator shown in FIGS. 1 to 3.
FIG. 5 is another schematic diagram illustrating the flows of the outdoor air and the indoor air in the heat exchanging ventilator shown in FIGS. 1 to 3.
FIG. 6 is a perspective view schematically illustrating another example of an inner housing configuring the heat exchanging ventilator of the invention.
FIG. 7 is a cross-sectional view schematically illustrating the inner housing shown in FIG. 6.
FIG. 8(a) is a cross-sectional view schematically illustrating an example of each of the shapes of a component side attachment portion and an attachment hole in the heat exchanging ventilator shown in FIG. 1, and FIG. 8(b) is a cross-sectional view schematically illustrating a state where the component side attachment portion shown in FIG. 8(a) is attached to the attachment hole.
FIG. 9 is a cross-sectional view schematically illustrating another example of the heat exchanging ventilator of the invention.
FIG. 10 is another cross-sectional view schematically illustrating the heat exchanging ventilator shown in FIG. 9.
FIG. 11 is an exploded perspective view schematically illustrating a shape of the heat exchanging ventilator of Patent Literature 1.

### Description of Embodiments

Hereinafter, an embodiment of a heat exchanging ventilator of the invention will be described in detail by referring to the drawings. Furthermore, the invention is not limited to the embodiment below.

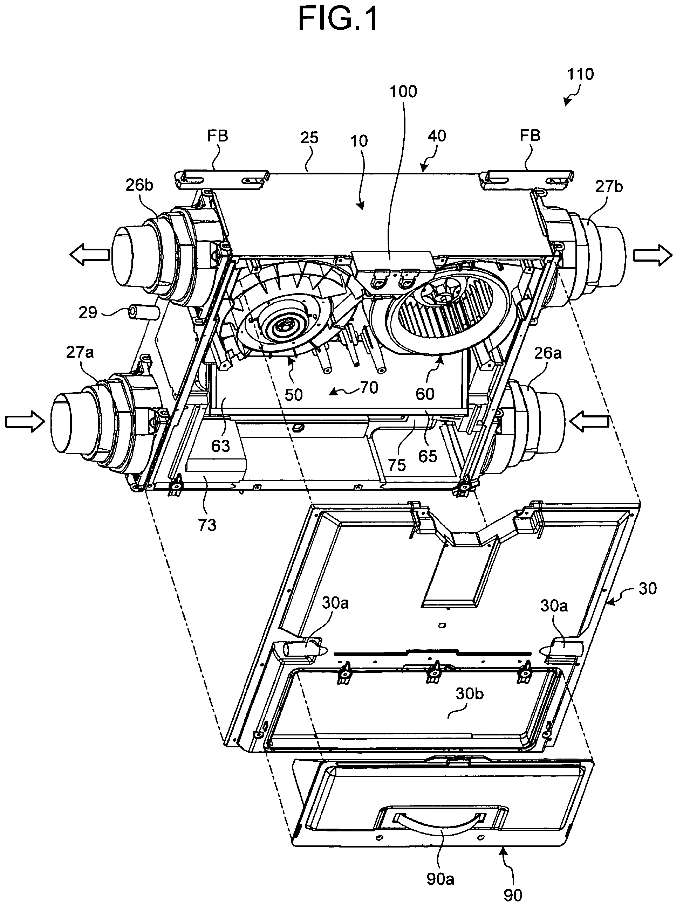

FIG. 1 is a partially exploded perspective view schematically illustrating an example of the heat exchanging ventilator of the invention. A heat exchanging ventilator 110 shown in the same drawing includes a housing 40, an air supply fan 50, an air discharge fan 60, a heat exchanger 70, a filter unit 90, a control device 100, and a operation unit (not shown), and perform ventilation by exchanging heat using the heat exchanger 70 between the outdoor air (supplied air) suctioned into the housing 40 by the air supply fan 50 and the indoor air (discharge air) suctioned into the housing 40 by the air discharge fan 60. FIG. 1 corresponds to a partially exploded perspective view when the heat exchanging ventilator 110 is installed on the ceiling of the room and is seen from the indoor side. Hereinafter, the respective components of the heat exchanging ventilator 110 will be described.

The housing 40 includes a box-like housing body 25 which has one open face, an outdoor inlet portion 26a, an indoor outlet portion 26b, an indoor inlet portion 27a, and an outdoor outlet portion 27b which are respectively attached to the side walls of the housing body 25, a bottom plate 30 which is attached to the open face side of the housing body 25, and a first drain pan 35 which is attached to the inner surface side of the bottom plate 30.

An outdoor inlet port, an indoor outlet port, an indoor inlet port, and an outdoor outlet port (which are not shown in FIG. 1) are installed at the side walls of the housing body 25 configuring the housing 40, where the outdoor inlet portion 26a communicates with the outdoor inlet port, the indoor outlet portion 26b communicates with the indoor outlet port, the indoor inlet portion 27a communicates with the indoor inlet port, and the outdoor outlet portion 27b communicates with the outdoor outlet port. The outdoor inlet portion 26a and the indoor inlet portion 27a are disposed to substantially face each other, and the indoor outlet portion 26b and the outdoor outlet portion 27b are disposed to substantially face each other. Each of the inlet portions 26a and 27a and the outlet portions 26b and 27b is connected to a separate duct.

Further, a first drain water discharging portion 29 communicating with a water retaining portion of an inner housing to be described later and four fixing brackets FB for fixing the housing body 25 to a building are also attached to the side walls of the housing body 25. However, only two fixing brackets FB are shown in FIG. 1.

On the other hand, the bottom plate 30 configuring the housing 40 has two second drain water discharging portions 30a and 30a communicating with the first drain pan 35, and an opening 30b is formed at a predetermined position of the bottom plate 30 to dispose a filter to be described later inside the housing 40. The bottom plate 30 is made of, for example, a synthetic resin.

The air supply fan 50 and the air discharge fan 60 are disposed in parallel between the indoor outlet port and the outdoor outlet port in the housing body 25, and are controlled by the control device 100. The air supply fan 50 is provided at the indoor side inside the housing body 25, and the air discharge fan 60 is provided at the outdoor side. Each of the air supply fan 50 and the air discharge fan 60 shown in the drawing is a single suction type sirocco fan, where the suction port of the air supply fan 50 is disposed to face the opposite side of the bottom plate 30, and the suction port of the air discharge fan 60 is disposed to face the bottom plate 30.

The heat exchanger 70 includes a heat exchanging element 63 and a frame 65 accommodating the heat exchanging element 63, and exchanges heat between the outdoor air suctioned into the housing 40 by the air supply fan 50 and the indoor air suctioned into the housing 40 by the air discharge fan 60. As the heat exchanging element 63, for example, a cross flow type element of a total heat exchange type, a sensible heat exchange type, or a latent heat exchange type of a is used in which a sheet-like paper segmenting member and an undulating paper gap holding member are alternately laminated and a plurality of air flow paths are formed between the segmenting member and the gap holding member therebelow and the segmenting member and the gap holding member thereabove. The frame 65 has a shape in which an edge portion remains at each of a ceiling surface and a top surface of a quadratic prism and portions are removed while keeping four corners extending in the height direction and the vicinity thereof.

The heat exchanger 70 including the heat exchanging element 63 and the frame 65 is disposed between the outdoor inlet port and the indoor inlet port in the housing body 25 so that the heat exchanging element 63 lies down and two diagonal corners are located in the perpendicular direction when the heat exchanger 70 is seen along the longitudinal direction (seen from the edge portion side). When the disposed heat exchanger 70 is seen in the top view, the corners of the heat exchanger 70 near the fans 50 and 60 contact the fans 50 and 60, and the corners opposite to the fans 50 and 60 air-tightly contact a second retaining frame 85 of the filter unit 90. Further, when the disposed heat exchanger 70 is seen in the side view from the edge portion thereof, the upper and lower corners air-tightly contact the inner surfaces of the housing 40. In order to fix the heat exchanger 70 to a predetermined position inside the housing 40, a first fixing member 73 and a second fixing member 75 are attached into the housing 40.

The filter unit 90 includes a filter which is disposed on a position where the outdoor air flows in with respect to the heat exchanger 70 and removes dust in the outdoor air and a filter retaining frame which retains the filter (which are not shown), and is attached to the bottom plate 30 while the filter is inserted into the housing 40 from the opening 30b of the bottom plate 30. A gripper portion 90a is provided at the filter unit 90 in order to easily detach the filter unit 90 from the housing 40 during the maintenance of the filter.

The control device 100 is attached to the housing 40 to be electrically connected to each of the air supply fan 50, the air discharge fan 60, and the operation unit (not shown), and individually controls the air supply fan 50 and the air discharge fan 60 in response to the command input from a user. The operation unit is connected to the control device 100 via a wired connection or a wireless connection, and serves as an input/output device of the control device 100.

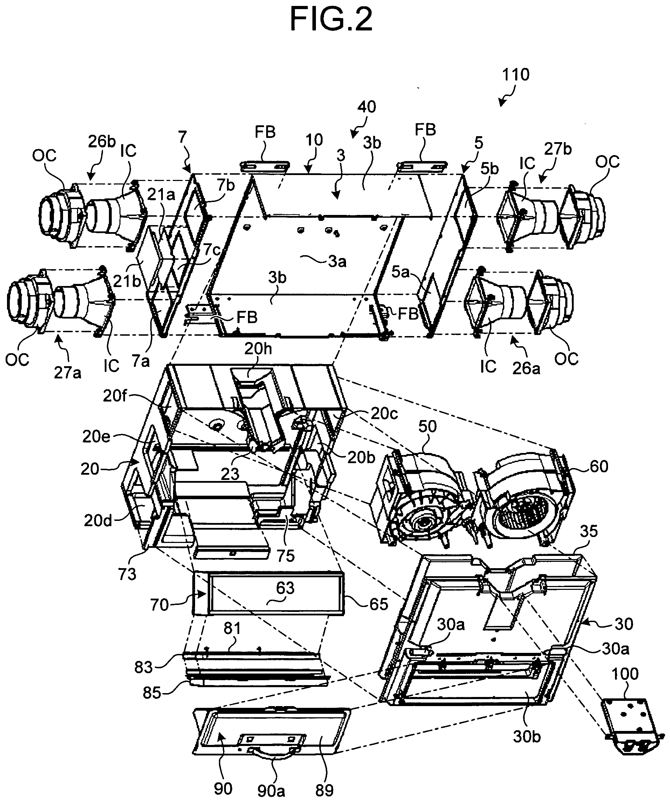

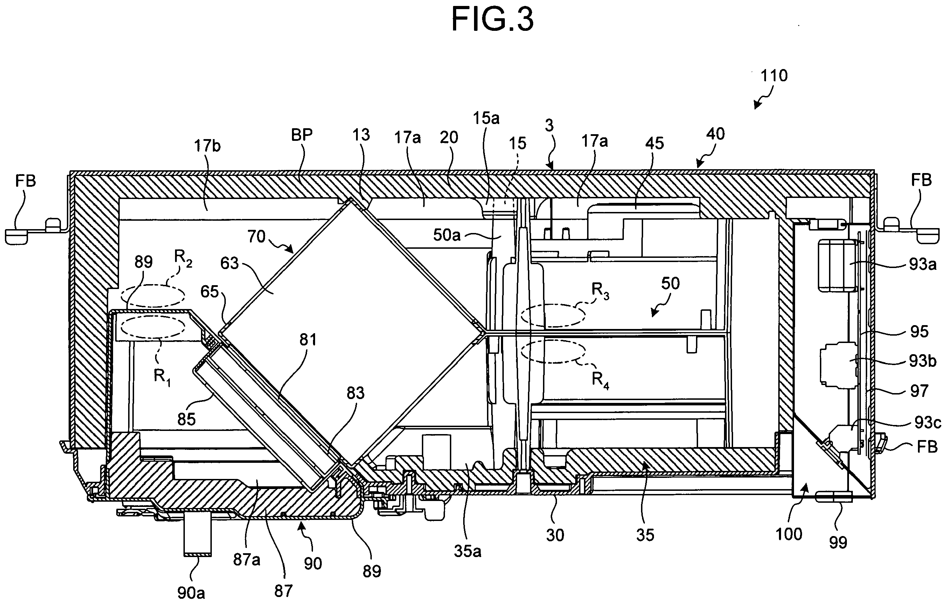

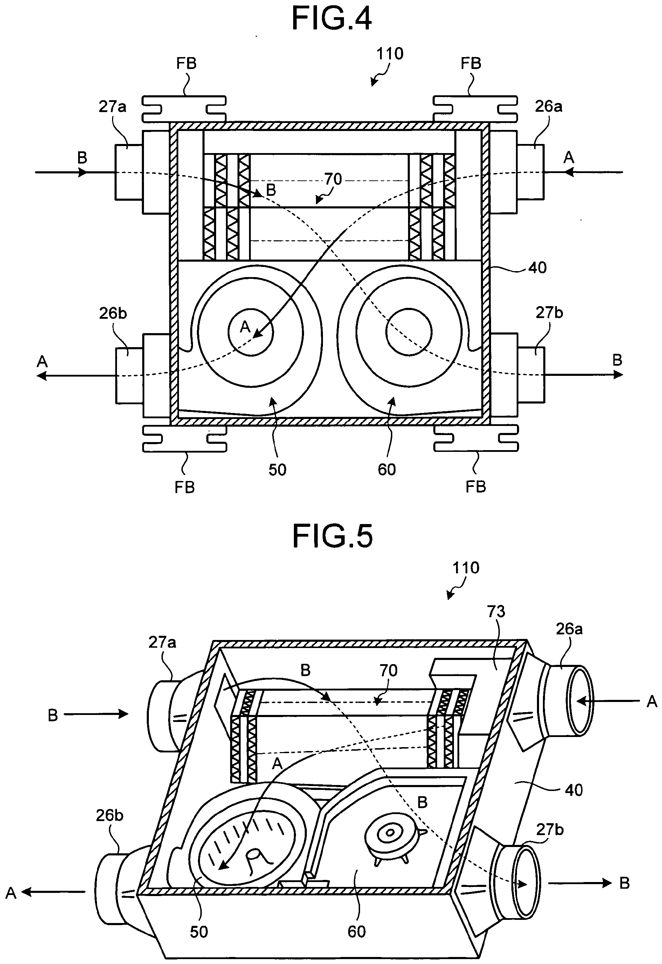

Since the heat exchanging ventilator 110 including the above-described components has a characteristic structure in the housing 40, the structure of the heat exchanging ventilator 110 will be described below by focusing on the structure of the housing 40 with reference to FIGS. 2 and 3, and the flows of the outdoor air and the indoor air in the heat exchanging ventilator 110 will be described with reference to FIGS. 4 and 5.

FIG. 2 is an exploded perspective view schematically illustrating the heat exchanging ventilator shown in FIG. 1. The same drawing corresponds to an exploded perspective view when the heat exchanging ventilator 110 shown in FIG. 1 is installed on the ceiling of the room and is seen from the indoor side. The same reference signs of FIG. 1 will be given to the components having been described already by referring to FIG. 1 in the components shown in FIG. 2, and the description thereof will not be repeated.

As shown in FIG. 2, the housing 40 of the heat exchanging ventilator 110 includes an outer housing 10 and an inner housing 20 which is accommodated in the outer housing 10. The outer housing 10 includes a housing body 3 and two side plates 5 and 7 which are attached to the housing body 3, and is formed in a box shape in which the side of the bottom plate 30 is formed as an open face. The housing body 3 is a sheet metal body that includes a back surface 3a and two side plates 3b and 3c, and the side plates 3b and 3c are integrally molded with the back surface 3a and face each other with the back surface 3a interposed therebetween.

The side plate 5 and the side plate 7 each are a sheet metal body that has a plurality of ventilation holes and is formed in a flat plate shape, and face each other while being attached to the housing body 3 at the side of the back surface 3a and the side plates 3b and 3c. The side plate 5 is provided with a ventilation hole 5a which forms the outdoor inlet port in the housing 40 and a ventilation hole 5b which forms the outdoor outlet port in the housing 40, and the side plate 7 is provided with a ventilation hole 7a which forms the indoor inlet port in the housing 40, a ventilation hole 7b which forms the indoor outlet port in the housing 40, and a preliminary ventilation hole 7c which is used to change the position of the indoor inlet port or the indoor outlet port.

On the other hand, the inner housing 20 configuring the housing 40 is formed in a box-like body which is integrally molded of, for example, a synthetic resin such as a styrene resin, and the side of the bottom plate 30 is opened. The inner housing 20 shown in the drawing includes a back surface and four side plates, no gap is present at the joint surface between the back surface and each side plate, and water may be retained on the back surface when the inner housing 20 is disposed so that the back surface is positioned on the downside. Among four side plates of the inner housing 20, the side plate contacting the side plate 5 of the outer housing 10 is provided with three ventilation holes 20a to 20c, the side plate contacting the side plate 7 in the outer housing 10 is provided with three ventilation holes 20d to 20f, and the side plate contacting the side plate 3b in the outer housing 10 is provided with a recess portion 20h for the attachment of the control device 100.

Furthermore, in FIG. 2, only five ventilation holes 20b to 20f are shown among six ventilation holes 20a to 20f, and strictly speaking, the ventilation hole 20d is a rectangular notch. In the state where the inner housing 20 is accommodated in the outer housing 10, the ventilation hole 20a not shown in FIG. 2 is disposed to be continuous to the ventilation hole 5a in the outer housing 10, so that it serves as the outdoor inlet port in the housing 40, and the ventilation hole 20c is disposed to be continuous to the ventilation hole 5b in the outer housing 10, so that it serves as the outdoor outlet port in the housing 40. Further, the ventilation hole 20d is disposed to be continuous to the ventilation hole 7a in the outer housing 10, so that it serves as the indoor inlet port, and the ventilation hole 20f is disposed to be continuous to the ventilation hole 7b in the outer housing 10, so that it serves as the indoor outlet port in the housing 40.

The housing 40 may be assembled, for example, in a manner such that the inner housing 20 is accommodated in the outer housing 10, the inlet portions 26a and 27a and the outlet portions 26b and 27b are attached to the outer housing 10, the air supply fan 50, the air discharge fan 60, and the heat exchanger 70 are attached into the inner housing 20, and the bottom plate 30 is attached to the outer housing 10 by, for example, fastening a screw. The first drain pan 35 made of a synthetic resin such as a styrene resin is fitted into the bottom plate 30 in advance.

Before or after the inner housing 20 is accommodated in the outer housing 10, the ventilation hole 7c provided in the side plate 7 of the outer housing 10 is doubly sealed by sealing plates 21a and 21b. Further, before or after the ventilation hole 7c is sealed, a tray 23 for the control device 100 is attached to the recess portion 20h of the inner housing 20 so as to be attachable thereto or detachable therefrom. Each of the inlet portions 26a and 27a and the outlet portions 26b and 27b has a synthetic resinous inner cylindrical casing IC and a synthetic resinous outer cylindrical casing OC, and is attached in a manner such that the inner cylindrical casing IC is inserted into the outer cylindrical casing OC and is fixed to the outer housing 10 by a screw (not shown).

The air supply fan 50 and the air discharge fan 60 are attached into the inner housing 20, for example, in a manner such that the component side attachment portions, which are respectively formed in advance in the air supply fan 50 and the air discharge fan 60, are fitted into predetermined attachment holes of the housing 40 or a screw is fixed from the side of the outer housing 10. The heat exchanger 70 is fixed into the inner housing 20 after the first fixing member 73 and the second fixing member 75 are attached into the inner housing 20. Each of the fixing brackets FB is fixed to the outer housing 10 by, for example, a screw (not shown) at a desired timing.

The filter unit 90 includes a filter 81, a first retaining frame 83 retaining the filter 81, a second retaining frame 85 retaining the first retaining frame 83 and the heat exchanger 70, a second drain pan 87, a unit body 89 to which the second retaining frame 85 is attached, and the gripper portion 90a attached to the unit body 89. The filter unit 90 is attached to the housing 40 while the filter 81 is inserted into the housing 40 from the opening 30b of the bottom plate 30. Finally, when the filter unit 90 is attached, the heat exchanging ventilator 110 is obtained.

FIG. 3 is a cross-sectional view schematically illustrating the heat exchanging ventilator shown in FIGS. 1 and 2. The same drawing corresponds to the perpendicular cross-sectional view when the heat exchanging ventilator 110 shown in FIGS. 1 and 2 is installed on the ceiling of the room. The same reference signs of FIG. 1 or 2 will be given to the components having been described already by referring to FIG. 1 or 2 in the components shown in FIG. 3, and the description thereof will not be repeated. Further, as for a part of thin members, depiction of the hatching is omitted.

As shown in FIG. 3, the back surface BP of the inner housing 20 configuring the heat exchanging ventilator 110, that is, the ceiling surface when the heat exchanging ventilator 110 is installed by positioning the bottom plate 30 on the downside is provided with an attachment portion 13 which is used for the attachment of the heat exchanger 70, and an attachment hole 15, into which component side attachment portions or component attachment screws (not shown) provided at the air supply fan 50 and the air discharge fan 60 are inserted. FIG. 3 shows a component side attachment portion 50a in the air supply fan 50. Further, in order to improve the water retaining function at the side of the back surface BP in the inner housing 20, a first housing side water retaining portion 17a and a second housing side water retaining portion 17b are also formed in the back surface BP so that a water retaining function is exhibited when the heat exchanging ventilator 110 is installed under the floor by positioning the bottom plate 30 at the upside.

Each of the first housing side water retaining portion 17a and the second housing side water retaining portion 17b is formed in a recess shape when the inner housing 20 is disposed by positioning the back surface BP on the downside. The first housing side water retaining portion 17a is formed rather at the side of the fans 50 and 60 in relation to the attachment portion 13 to extend around the attachment hole 15, and the second housing side water retaining portion 17b is formed to be away from the fans 50 and 60 in relation to the attachment portion 13. Each of the attachment portion 13 and an outer periphery 15a of the attachment hole 15 protrudes toward the open face of the inner housing 20, that is, the bottom plate 30.

A first drain pan 35 is disposed so as to face the first housing side water retaining portion 17a. Further, a second drain pan 87 of the filter unit 90 is disposed so as to face the second housing side water retaining portion 17b. The first drain pan 35 is provided with a first drain pan side water retaining portion 35a which is formed in a recess shape when the heat exchanging ventilator 110 is installed by positioning the bottom plate 30 on the downside, and the second drain pan 87 is provided with a second drain pan side water retaining portion 87a which is formed in a recess shape when the heat exchanging ventilator 110 is installed by positioning the bottom plate 30 on the downside.

Furthermore, each of the air supply fan 50 and the air discharge fan 60 (refer to FIG. 1 or 2) is a motor driven type fan, and FIG. 3 shows a motor 45 of the air supply fan 50. Further, in FIG. 3, there is exemplified the components of the control device 100, that is, a control substrate 95 having electronic components 93a to 93c mounted thereon, an electric insulating sheet 97 electrically isolating the control substrate 95 from the periphery thereof, and a bush 99 for drawing out a wire (not shown) connected to the control substrate 95 from the control device 100. The reference signs R₁ to R₄ in FIG. 3 schematically show regions where dew condensation likely to occur. The regions R₁ to R₄ will be described below in detail.

When the heat exchanging ventilator 110 with the above-described configuration is operated, the air supply fan 50 and the air discharge fan 60 are respectively operated under the control of the control device 100 (refer to FIG. 1 or 2), the outdoor air is suctioned into the housing 40 by the air supply fan 50, and the indoor air is suctioned into the housing 40 by the air discharge fan 60. The outdoor air and the indoor air suctioned into the housing 40 exchange heat therebetween while they flow through the heat exchanger 70, the outdoor air flowing through the heat exchanger 70 is blasted into the indoor side from the indoor outlet port, and the indoor air flowing through the heat exchanger 70 is discharged to the outside from the outdoor outlet port.

FIGS. 4 and 5 are schematic diagrams respectively illustrating the flows of the outdoor air and the indoor air in the heat exchanging ventilator shown in FIGS. 1 to 3. FIG. 4 is a schematic diagram when the heat exchanging ventilator 110 (refer to FIGS. 1 to 3) is installed by positioning the bottom plate 30 of the housing 40 on the downside and the inside of the heat exchanging ventilator 110 is seen in the plan view, and FIG. 5 is a schematic diagram when the heat exchanging ventilator 110 is installed by positioning the bottom plate 30 of the housing 40 on the downside and the inside of the heat exchanging ventilator 110 is obliquely seen.

As depicted by the arrows A in FIGS. 4 and 5, when the heat exchanging ventilator 110 is operated, the outdoor air is suctioned from the outdoor inlet portion 26a into the housing 40, flows in the heat exchanger 70 from the oblique lower side of the heat exchanger 70 to the oblique upper side thereof to reach the air supply fan 50, and then is blasted into the indoor side through the indoor outlet portion 26b. Further, as depicted by the arrows B of FIGS. 4 and 5, when the heat exchanging ventilator 110 is operated, the indoor air is suctioned from the indoor inlet portion 27a into the housing 40, flows in the heat exchanger 70 from the oblique upper side of the heat exchanger 70 to the oblique lower side thereof to reach the air discharge fan 60, and then is discharged to the outside through the outdoor outlet portion 27b. When the heat exchanging ventilator 110 is operated, the air paths of the outdoor air (supplied air) and the indoor air (discharge air) are formed inside the housing 40.

In many cases, the temperature of the outdoor air is different from the temperature of the indoor air. For this reason, dew condensation may occur when one of the outdoor air and the indoor air is cooled by the other thereof inside the housing 40. For example, dew condensation likely to occur in the regions R₁, R₂, R₃, and R₄ and the heat exchanger 70 shown in FIG. 3.

The region R₁ is located at the inner upper portion of the unit body 89 (refer to FIG. 3) of the filter unit 90, and the region R₂ is located at the outer upper portion of the unit body 89. In the regions R₁ and R₂, the outdoor air suctioned from the outdoor inlet portion 26a into the housing 40 is adjacent to the indoor air suctioned from the indoor inlet portion 27a into the housing 40 through the upper portion of the unit body 89. For this reason, dew condensation likely to occur in the region R₁ when the temperature of the outdoor air is higher than that of the indoor air, whereas dew condensation likely to occur in the region R₂ when the temperature of the indoor air is higher than that of the outdoor air.

Further, the region R₃ is located at a position between the air supply fan 50 and the air discharge fan 60 and the vicinity thereof, the position being slightly above the center of the fans 50 and 60 in the thickness direction (refer to FIGS. 1 and 2). The region R₄ is located at a position between the air supply fan 50 and the air discharge fan 60 and the vicinity thereof, the position being slightly below the center of the fans 50 and 60 in the thickness direction. In the regions R₃ and R₄, a part of the outdoor air suctioned by the air supply fan 50 through the heat exchanger 70 mixes with a part of the indoor air suctioned by the air discharge fan 60 through the heat exchanger 70 or a difference in the temperature occurs between the air supply fan 50 and the air discharge fan 60. For this reason, dew condensation likely to occur in the region R₃ when the temperature of the outdoor air is higher than that of the indoor air, whereas dew condensation likely to occur in the region R₄ when the temperature of the indoor air is higher than that of the outdoor air.

In the heat exchanger 70, the flow path of the outdoor air suctioned from the outdoor inlet portion 26a into the housing 40 is adjacent to the flow path of the indoor air suctioned from the indoor inlet portion 27a into the housing 40 through the segmenting member of the heat exchanging element. For this reason, dew condensation likely to occur in the flow path of the outdoor air (supplied air) when the temperature of the outdoor air is higher than that of the indoor air, and dew condensation likely to occur in the flow path of the indoor air (discharge air) when the temperature of the indoor air is higher than that of the outdoor air.

Water caused by the dew condensation in the region R₁ is mainly retained by the second drain pan side water retaining portion 87a (refer to FIG. 3) of the unit body 89, and is naturally dried. Further, some of water caused by the dew condensation in the region R₂ is accumulated at that position and is naturally dried, and the rest of the water flows in the heat exchanger 70 along with the indoor air so as to be retained by the first drain pan side water retaining portion 35a (refer to FIG. 3). Water caused by the dew condensation in the flow path of the outdoor air (supplied air) inside the heat exchanger 70 mainly flows to the second drain pan side water retaining portion 87a of the unit body 89 to be retained therein, and is naturally dried. Water caused by the dew condensation in the flow path of the indoor air (discharge air) inside the heat exchanger 70 flows to the first drain pan side water retaining portion 35a along with the indoor air to be retained therein. Then, some of water caused by the dew condensation in the regions R₃ and R₄ is naturally dried, and the rest of the water is retained in the first drain pan side water retaining portion 35a. The water retained in the first drain pan side water retaining portion 35a flows from each of the second drain water discharging portions 30a and 30a (refer to FIG. 1) provided in the bottom plate 30 to a drain (not shown) to flow to the outside.

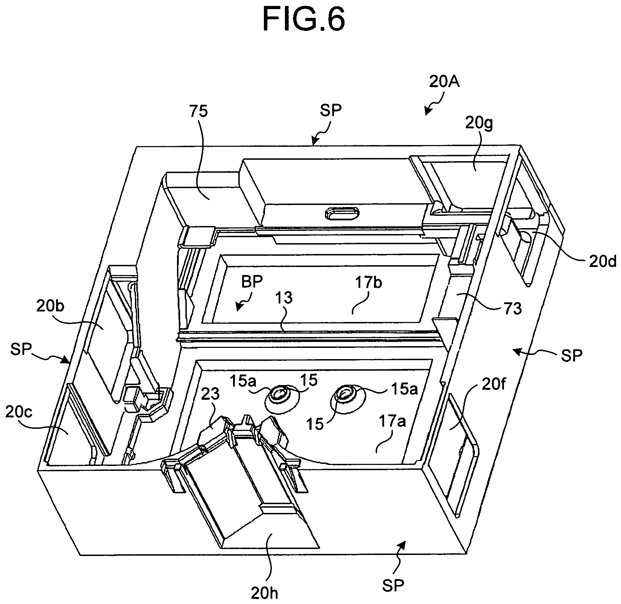

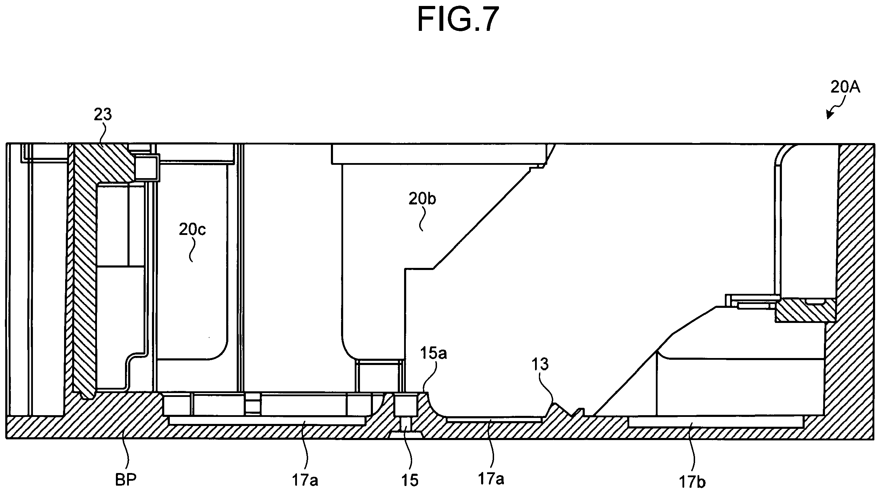

When the heat exchanging ventilator 110 is installed on the ceiling of the room, the water caused by the dew condensation is naturally dried or retained as described above, and the retained water is discharged from each of the drain water discharging portions 30a and 30a to the outside. For this reason, it is easy to prevent the leakage of the water to the outside of the heat exchanging ventilator. Further, in the heat exchanging ventilator 110, even when the heat exchanging ventilator 110 is installed under the floor, water may be retained at the side of the back surface BP of the inner housing 20 (refer to FIGS. 2 and 3). Further, since the back surface BP is provided with the first housing side water retaining portion 17a and the second housing side water retaining portion 17b, it is easy to prevent the leakage of the water to the outside of the heat exchanging ventilator. Hereinafter, the water retaining function of the inner housing configuring the heat exchanging ventilator of the invention will be described in detail by referring to FIGS. 6 and 7.

FIG. 6 is a perspective view schematically illustrating another example of the inner housing configuring the heat exchanging ventilator of the invention, and FIG. 7 is a cross-sectional view schematically illustrating the inner housing shown in FIG. 6. FIG. 6 is a diagram when the inner housing is obliquely seen by positioning the back surface of the inner housing on the downside, and FIG. 7 is a longitudinal sectional view of the inner housing when the back surface of the inner housing is positioned on the downside.

An inner housing 20A shown in the drawing has the same configuration as that of the inner housing 20 except that the arrangement pattern of the ventilation holes in the side wall or the shapes of the first fixing member 73 and the second fixing member 75 fixing the heat exchanger are slightly different from those of the inner housing 20 shown in FIGS. 2 and 3. In the inner housing 20A, since the back surface BP and four side plates SP (refer to FIG. 6) are integrally molded with each other as in the inner housing 20, water may be retained at the side of the back surface BP when the inner housing 20A is disposed by positioning the back surface BP on the downside. Further, since the back surface BP is provided with the first housing side water retaining portion 17a and the second housing side water retaining portion 17b which are each formed in a recess shape, it is easy to have a high water retaining function. Furthermore, in FIGS. 6 and 7, the same reference signs of FIG. 2 or 3 will be given to the components having been described already by referring to FIG. 2 or 3 and having the similar functions, and the description thereof will not be repeated.

When the heat exchanging ventilator 110 (refer to FIGS. 1 and 2) that includes the inner housing 20A or the inner housing 20 is installed on the ceiling of the room by positioning the drain pans (the first drain pan 35 and the second drain pan 87) on the downside, water caused by dew condensation may be accumulated in the first drain pan side water retaining portion 35a and the second drain pan side water retaining portion 87a (refer to FIG. 3). Then, the water retained in the first drain pan side water retaining portion 35a is discharged to the outside in a manner of flowing from the second drain water discharging portions 30a and 30a (refer to FIG. 1) provided in the bottom plate 30 to a drain (not shown).

Further, when the heat exchanging ventilator is installed under the floor of the room by positioning the drain pans (the first drain pan 35 and the second drain pan 87) at the upside, water caused by dew condensation may be accumulated at the side of the back surface BP (refer to FIGS. 3, 6, and 7) of the inner housing 20, and specifically, the first housing side water retaining portion 17a and the second housing side water retaining portion 17b. Then, the water accumulated in the first housing side water retaining portion 17a and the second housing side water retaining portion 17b is discharged to the outside in a manner of flowing from the first drain water discharging portion 29 (refer to FIG. 1), which is attached to the side wall of the inner housing 20 and communicating with the inside of the inner housing 20 that is specifically the first housing side water retaining portion 17a and the second housing side water retaining portion 17b, to a drain (not shown).

Therefore, it is possible to prevent the leakage of the water even when the heat exchanging ventilator 110 is installed whichever of the ceiling and the floor of the room. Further, the housing 40 may be easily manufactured such that it accommodates the inner housing 20 (refer to FIG. 2) in the outer housing 10 and the drain pan is attached to face the back surface BP of the inner housing 20. Further, the maintenance such as inspection, repair, and replacement of the heat exchanger 70 or the filter 81 may be performed from the side of the open faces of the inner housings 20 and 20A, that is, the bottom plate 30. Therefore, even when the heat exchanging ventilator is installed whichever of the ceiling and the floor of the room, the maintenance may be easily performed by installing the heat exchanging ventilator so that the open faces of the inner housings 20 and 20A face the indoor side. It is easy to collect and discard the old heat exchanger 70 or filter 81.

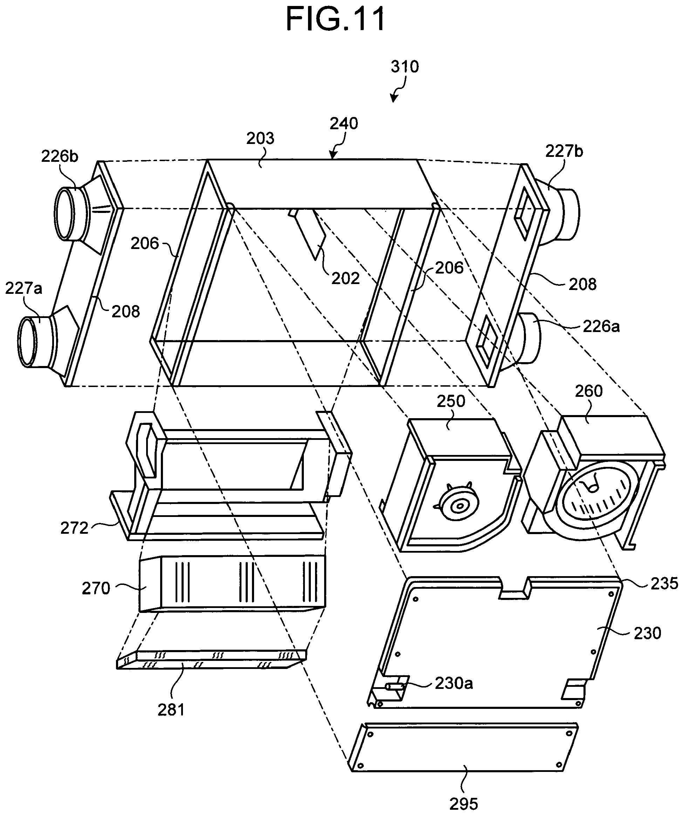

For example, when the heat exchanging ventilator of Patent Literature 1 is installed under the floor so that the top side and the bottom side are reversed in order to easily perform the maintenance thereof, water caused by dew condensation is accumulated inside the housing, and then leaks from a gap between the body casing and the side plate to the outside of the heat exchanging ventilator, so that the water may damage the building. On the other hand, in the heat exchanging ventilator 110, it is easy to prevent the leakage of the water even when it is installed under the floor. The different configurations between the heat exchanging ventilator of Patent Literature 1 and the heat exchanging ventilator 110 will be described below in detail by referring to FIG. 11.

FIG. 11 is an exploded perspective view schematically illustrating a shape of the heat exchanging ventilator of Patent Literature 1. In the heat exchanging ventilator 310 shown in the same drawing, a housing 240 includes a body casing 203 in which a ceiling portion and two side plates are integrally molded, two side plates 208 which are attached to the body casing 203 through a frame 206, and a bottom plate 230 which is attached to the body casing, and a drain pan 235 is fitted to the inside of the bottom plate 230.

Each side plate 208 is provided with a predetermined number of ventilation holes, an outdoor inlet portion 226a and an outdoor outlet portion 227b are attached to one side plate 208, and an indoor outlet portion 226b and an indoor inlet portion 227a are attached to the other side plate 208. Further, a segmenting plate 202 is attached to the inside of the ceiling portion of the body casing 203. An air supply fan 250 and an air discharge fan 260 are disposed in parallel inside the housing 240 with the segmenting plate 202 interposed therebetween, and a heat exchanger 270 is attached to an element box 272 fixed into the housing 240. A filter 281 is disposed at the side of the bottom plate 230 in the heat exchanger 270, and a receiving plate 295 is disposed at the outer side thereof together with the drain pan 235 to receive water caused by dew condensation.

The housing 240 of the heat exchanging ventilator 310 does not include the inner housing 20 (refer to FIG. 2) of the heat exchanging ventilator 110, and the body casing 203 corresponds to the housing body 25 (refer to FIG. 2) of the heat exchanging ventilator 110. For this reason, when the heat exchanging ventilator is installed under the floor so that the top side and the bottom side are reversed to easily perform the maintenance thereof, the bottom plate 230 is located on the upper side, so that the drain pan 235 and the receiving plate 295 cannot be properly used for their original purposes.

Consequently, the water caused by the dew condensation is accumulated inside the housing 240, and then it may leak from a gap between the body casing 203 and the side plate 208 to the outside of the heat exchanging ventilator to damage the building. In order to prevent the leakage of the water between the body casing 203 and the side plate 208, these need to be water tightly bonded to each other or need to be coated with a sealant or the like, so that it takes much effort for manufacturing the housing 40. On the other hand, in the heat exchanging ventilator 110, the inner housing 20 (refer to FIG. 2) is accommodated inside the outer housing 10, and the drain pans (the first drain pan 35 and the second drain pan 87) are attached to face the back surface BP (refer to FIGS. 3, 6, and 7) of the inner housing 20. Accordingly, the housing 40 (refer to FIG. 2) may be assembled, and the leakage of the water may be easily prevented even when the heat exchanging ventilator is installed whichever of the ceiling and the floor of the room.

In order to prevent the leakage of the water even when a comparatively large amount of water is retained in the first housing side water retaining portion 17a or the second housing side water retaining portion 17b (refer to FIGS. 3, 6, and 7), it is desirable to also prevent the leakage of the water from a position where the air supply fan 50 or the air discharge fan 60 (refer to FIG. 2) is attached to the inner housing 20.

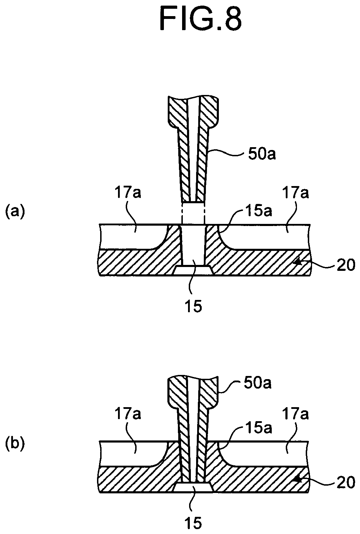

FIG. 8(a) is a cross-sectional view schematically illustrating an example of each of the shapes of the component side attachment portion and the attachment hole in the heat exchanging ventilator 110, and FIG. 8(b) is a cross-sectional view schematically illustrating a state where the component side attachment portion shown in FIG. 8(a) is attached to the attachment hole. The component side attachment portion shown in the same drawing is the component side attachment portion 50a provided in the air supply fan 50, and the attachment hole is the attachment hole 15 provided in the inner housing 20 (refer to FIG. 3).

The component side attachment portion 50a shown in FIGS. 8(a) and 8(b) is a cylindrical screw receiving portion and the front end side outer diameter gradually decreases. On the other hand, the attachment hole 15 has a region where the inner diameter at the side of the outer housing 10 (refer to FIG. 3) gradually decreases. At the time of attaching the air supply fan 50 to the inner housing 20, the component side attachment portion 50a is first inserted, that is, press-fitted into the attachment hole 15 as shown in FIG. 8(b). Subsequently, a screw is fastened from the side of the inner housing 20.

When the air supply fan 50 is attached to the inner housing 20 in this manner, the outer peripheral surface of the component side attachment portion 50a comes into close contact with the inner wall of the attachment hole 15, so that the leakage of the water may be prevented from the position attached with the air supply fan 50. It is desirable to perform the attachment of the air discharge fan 60 (refer to FIG. 2) to the inner housing 20 as in the attachment of the air supply fan 50. Furthermore, the reference sign "17a" in FIGS. 8(a) and 8(b) indicates the first housing side water retaining portion.

Further, regarding each of the air supply fan 50 and the air discharge fan 60, it is desirable to dispose the motor to be away from any one of the inner housing 20 and the drain pan, that is, the first drain pan 35. If the air supply fan 50 and the air discharge fan 60 are respectively disposed in this manner, even when the heat exchanging ventilator 110 is installed whichever of the ceiling and the floor of the room, it is easy to prevent the ingress of the water accumulated in the first drain pan 35 or the water accumulated in the inner housing 20 into the motor.

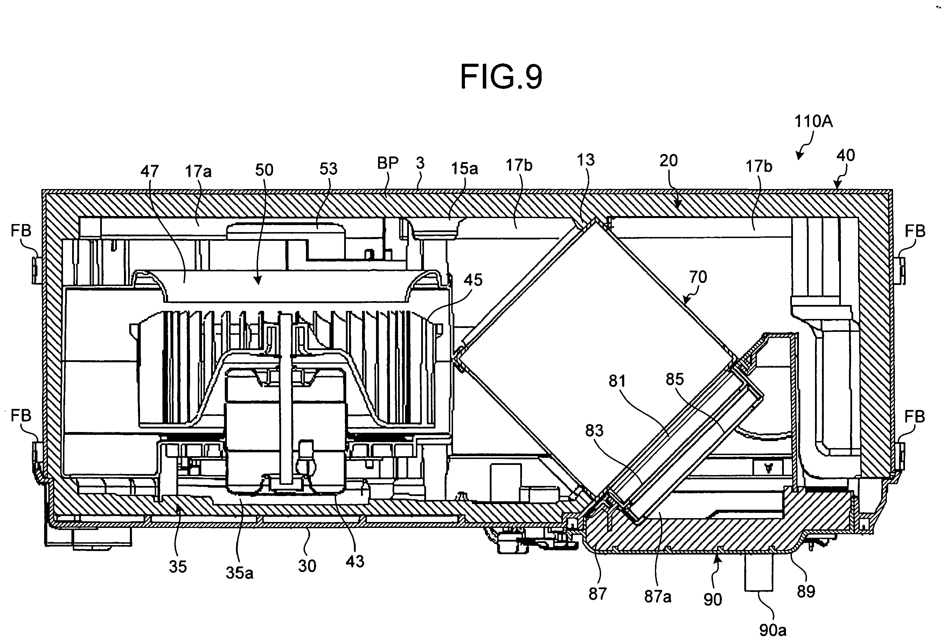

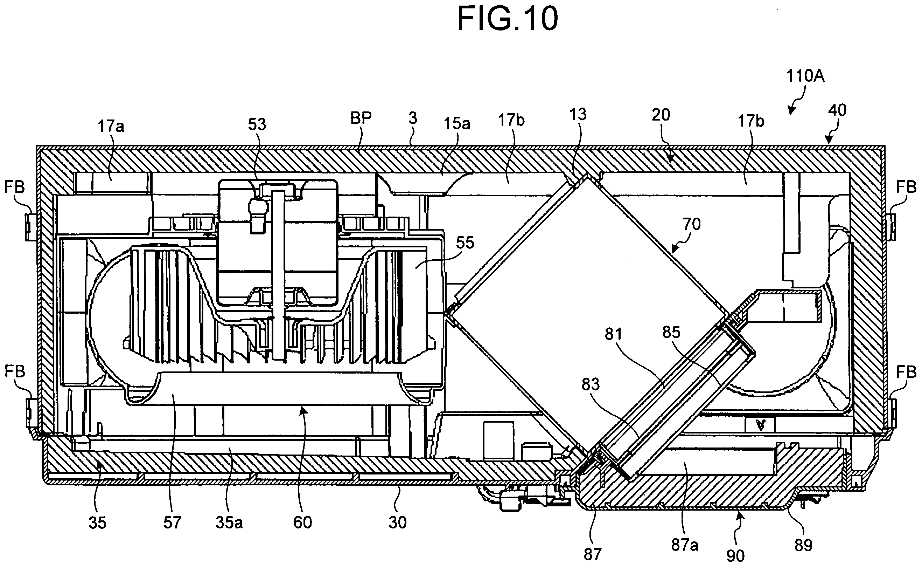

FIG. 9 is a cross-sectional view schematically illustrating another example of the heat exchanging ventilator of the invention, and FIG. 10 is another cross-sectional view schematically illustrating the heat exchanging ventilator shown in FIG. 9. A heat exchanging ventilator 110A shown in the drawing has the substantially same configuration as that of the heat exchanging ventilator 110 shown in FIGS. 1 and 2. The same reference signs of FIG. 1, 2, or 3 will be given to the components similar to those of FIG. 1, 2, or 3 in the components shown in FIG. 9 or 10, and the description thereof will not be repeated. Further, as for a part of thin members, depiction of the hatching is omitted.

As shown in FIG. 9, in the heat exchanging ventilator 110A, a motor 43 of the air supply fan 50 is attached to be away from the first drain pan 35 without contacting the first drain pan 35. The reference sign "45" of the same drawing indicates a sirocco fan configuring the air supply fan 50, the reference sign "47" indicates the casing of the air supply fan 50, and the reference sign "53" indicates the motor of the air discharge fan 60.

Further, as shown in FIG. 10, in the heat exchanging ventilator 110A, a motor 53 of the air discharge fan 60 is attached to be away from the inner housing 20 without contacting the inner housing 20, that is, the back surface BP. The reference sign "55" of the drawing indicates a sirocco fan configuring the air discharge fan 60, and the reference sign "57" indicates the casing of the air discharge fan 60.

In the heat exchanging ventilator 110A in which the air supply fan 50 and the air discharge fan 60 are attached as described above, even when the heat exchanging ventilator 110A is installed whichever of the ceiling and the floor of the room, it may be easy to prevent the ingress of the water accumulated in the first drain pan 35 or the water accumulated in the inner housing 20 into the motors 43 and 53. Further, if the gap between the motor 43 of the air supply fan 50 and the first drain pan 35 and the gap between the motor 53 of the air discharge fan 60 and the back surface BP of the inner housing 20 are respectively set to the substantially same width (interval), it is easy to ensure the substantially same safety between the case where the heat exchanging ventilator 110A is installed on the ceiling and the case where it is installed under the floor of the room.

While the embodiment of the heat exchanging ventilator of the invention has been described as above, as described above, the invention is not limited to the above-described embodiment. It is basically sufficient that the heat exchanging ventilator of the invention includes the box-like inner housing, which has one open face and retains water at the side of the back surface when the back surface facing the open face is disposed to be positioned on the downside, and the drain pan which is disposed at the open face of the inner housing to face the back surface of the inner housing. The specific configuration of the heat exchanging ventilator may be appropriately selected.

For example, it may be appropriately determined whether a recess-like water retaining portion is provided at the back surface of the inner housing. When the recess-like water retaining portion is provided, the number of them may be set to one or more desired number in consideration of the distribution of the position where dew condensation likely to occur. Further, the total number of the drain pans disposed at the open face of the inner housing may be appropriately selected in consideration of the distribution of the position where dew condensation likely to occur inside the housing.

The air supply fan and the air discharge fan may be disposed in parallel at one of the outdoor side and the indoor side in the housing, or may be distributed at the outdoor side and the indoor side with the heat exchanger interposed therebetween. The arrangement of the air supply fan and the air discharge fan may be appropriately selected in accordance with the shape of the supply/discharge paths to be formed inside the housing. Further, the water which can be accumulated in the housing is not limited to the water caused by dew condensation. The water (droplets) contained in the indoor air, such as moisture contained in a humid atmosphere of a bathroom suctioned from the indoor inlet portion into the housing, may be retained similarly to the water caused by the dew condensation. The heat exchanging ventilator of the invention may be used through various changes, modifications, and combinations.

### Industrial Applicability

The heat exchanging ventilator of the invention may be suitably used as a heat exchanging ventilator for home or office.

### Reference Signs List

- 10: OUTER HOUSING
- 13: ATTACHMENT PORTION FOR ATTACHING HEAT EXCHANGER
- 15: ATTACHMENT HOLE
- 15a: OUTER PERIPHERY OF ATTACHMENT HOLE
- 17a: FIRST HOUSING SIDE WATER RETAINING PORTION
- 17b: SECOND HOUSING SIDE WATER RETAINING PORTION
- 20, 20A: INNER HOUSING
- 25: HOUSING BODY
- 26a: OUTDOOR INLET PORTION
- 26b: INDOOR OUTLET PORTION
- 27a: INDOOR INLET PORTION
- 27b: OUTDOOR OUTLET PORTION
- 29: FIRST DRAIN WATER DISCHARGING PORTION
- 30: BOTTOM PLATE
- 30a: SECOND DRAIN WATER DISCHARGING PORTION
- 35: FIRST DRAIN PAN
- 35a: FIRST DRAIN PAN SIDE WATER RETAINING PORTION
- 40: HOUSING
- 43: MOTOR OF AIR SUPPLY FAN
- 50: AIR SUPPLY FAN
- 50a: COMPONENT SIDE ATTACHMENT PORTION
- 53: MOTOR OF DISCHARGE FAN
- 60: DISCHARGE FAN
- 63: HEAT EXCHANGING ELEMENT
- 65: FRAME
- 70: HEAT EXCHANGER
- 81: FILTER
- 83: FIRST RETAINING FRAME
- 85: SECOND RETAINING FRAME
- 87: SECOND DRAIN PAN
- 87a: SECOND DRAIN PAN SIDE WATER RETAINING PORTION
- 90: FILTER UNIT
- 100: CONTROL DEVICE
- 110, 110A: HEAT EXCHANGING VENTILATOR
- BP: BACK SURFACE OF INNER HOUSING

## Claims

1. A heat exchanging ventilator (110, 110A) in which an air supply fan (50), an air discharge fan (60), and a heat exchanger (70) are disposed inside a housing provided with an outdoor inlet portion (26a), an indoor outlet portion (26b), an indoor inlet portion (27a), and an outdoor outlet portion (27b),
which performs ventilation while exchanging heat using the heat exchanger (70) between outdoor air suctioned from the outdoor inlet portion (26a) so as to be introduced into the housing by the air supply fan (50) and indoor air suctioned from the indoor inlet portion (27a) so as to be introduced into the housing by the air discharge fan (60), and
which is capable of accumulating water caused by dew condensation inside the housing,
wherein the housing includes:
an inner housing (20, 20A) that is integrally molded in a box shape which has one face open, a back surface (BP) facing the open face, and side plates uprightly arranged around the back surface (BP); and
a drain pan (35, 87) which is disposed on a side of the open face of the inner housing (20, 20A), and
**characterized in that**:
the inner housing (20, 20A) has a housing side water retaining portion (17a, 17b) that exhibits a recessed form at the back surface (BP),
the housing side water retaining portion (17a, 17b) is provided with an attachment hole (15) through which a component side attachment portion or a component attachment screw is inserted and an outer periphery (15a), wherein the attachment hole (15) penetrates the back surface (BP), and the outer periphery (15a) surrounds the attachment hole (15) and protrudes toward the open face.

2. The heat exchanging ventilator (110, 110A) according to claim 1,
wherein an inner diameter of the attachment hole (15) gradually decreases from the inner side surface toward an outer side surface of the back surface (BP), and
the component side attachment portion (50a) is a cylindrical screw receiving portion, and has an outer diameter decreasing toward an end side thereof that is into be inserted into the attachment hole (15).

3. The heat exchanging ventilator (110, 110A) according to claim 1 or 2, further comprising:
a drain water discharging portion (29) which is attached to a side plate of the inner housing (20, 20A) and communicates with the inside of the inner housing (20, 20A).

4. The heat exchanging ventilator (110, 110A) according to any one of claims 1 to 3,
wherein each of the air supply fan (50) and the air discharge fan (60) is a motor driven type fan, and
wherein each of a motor of the air supply fan (50) and a motor of the air discharge fan (60) is apart from both of the inner housing (20, 20A) and the drain pan (35, 87).

## Patentansprüche

1. Wärmeaustauschbelüfter (110, 110A), in dem ein Luftzuführungslüfter (50), ein Luftabgabelüfter (60) und ein Wärmetauscher (70) innerhalb eines Gehäuses angeordnet sind, das mit einem Außeneinlassabschnitt (26a), einem Innenauslassabschnitt (26b), einem Inneneinlassabschnitt (27a) und einem Außenauslassabschnitt (27b) versehen ist,
der Belüftung durchführt, während unter Verwendung des Wärmetauschers (70) Wärme ausgetauscht wird zwischen Außenluft, die von dem Außeneinlassabschnitt (26a) angesaugt wird, um durch den Luftzuführungslüfter (50) in das Gehäuse eingebracht zu werden, und Innenluft, die von dem Inneneinlassabschnitt (27a) angesaugt wird, um durch den Luftabgabelüfter (60) in das Gehäuse eingebracht zu werden, und
der in der Lage ist, Wasser zu sammeln, das durch Taukondensation innerhalb des Gehäuses erzeugt wird,
wobei das Gehäuse aufweist:
ein Innengehäuse (20, 20A), das in einer Kastenform, die eine offene Fläche, eine hintere Oberfläche (BP), die der offenen Fläche zugewandt ist, und Seitenplatten, die aufrecht um die hintere Oberfläche (BP) herum angeordnet sind (BP) aufweist, integral ausgeformt ist; und
eine Ablaufwanne (35, 87), die auf einer Seite der offenen Fläche des Innengehäuses (20, 20A) angeordnet ist, und
**dadurch gekennzeichnet, dass**:
das Innengehäuse (20, 20A) einen gehäuseseitigen Wasserrückhalteabschnitt (17a, 17b) aufweist, der an der hinteren Oberfläche (BP) eine ausgesparte Form aufweist,
der gehäuseseitige Wasserrückhalteabschnitt (17a, 17b) mit einem Befestigungsloch (15), durch das ein komponentenseitiger Befestigungsabschnitt oder eine Komponentenbefestigungsschraube eingesetzt ist, und einer äußereren Peripherie (15a) versehen ist, wobei das Befestigungsloch (15) die hintere Oberfläche (BP) durchdringt, und die äußere Peripherie (15a) das Befestigungsloch (15) umgibt und zur offenen Fläche hin vorsteht.

2. Wärmeaustauschbelüfter (110, 110A) nach Anspruch 1,
wobei ein Innendurchmesser des Befestigungslochs (15) von der inneren Seitenoberfläche zu einer äußeren Seitenoberfläche der hinteren Oberfläche (BP) hin allmählich abnimmt, und
der komponentenseitige Befestigungsabschnitt (50a) ein zylindrischer Schraubenaufnahmeabschnitt ist und einen Außendurchmesser aufweist, der zu einer Endseite davon hin abnimmt, die in das Befestigungsloch (15) einzubringen ist.

3. Wärmeaustauschbelüfter (110, 110A) nach Anspruch 1 oder 2, ferner umfassend:
einen Ablaufwasserabgabeabschnitt (29), der an einer Seitenplatte des Innengehäuses (20, 20A) befestigt ist und mit der Innenseite des Innengehäuses (20, 20A) kommuniziert.

4. Wärmeaustauschbelüfter (110, 110A) nach einem der Ansprüche 1 bis 3,
wobei jeder von dem Luftzuführungslüfter (50) und dem Luftabgabelüfter (60) ein Lüfter vom motorisch betriebenen Typ ist, und
wobei jeder von einem Motor des Luftzuführungslüfters (50) und einem Motor des Luftabgabelüfters (60) von beidem, dem Innengehäuse (20, 20A) und der Ablaufwanne (35, 87) getrennt ist.

## Revendications

1. Ventilateur d'échange de chaleur (110, 110A) dans lequel un ventilateur d'alimentation en air (50), un ventilateur de décharge d'air (60) et un échangeur de chaleur (70) sont disposés à l'intérieur d'un boîtier prévu avec une partie d'entrée extérieure (26a), une partie de sortie intérieure (26b), une partie d'entrée intérieure (27a) et une partie de sortie extérieure (27b),
qui réalise la ventilation tout en échangeant la chaleur à l'aide de l'échangeur de chaleur (70) entre l'air extérieur aspiré par la partie d'entrée extérieure (26a) afin d'être introduit dans le boîtier par le ventilateur d'alimentation en air (50) et l'air intérieur aspiré par la partie d'entrée intérieure (27a) afin d'être introduit dans le boîtier par le ventilateur de décharge d'air (60), et
qui est capable d'accumuler de l'eau provoquée par la condensation de rosée à l'intérieur du boîtier,
dans lequel le boîtier comprend :
un boîtier interne (20, 20A) qui est moulé de manière solidaire selon une forme de boîte qui a une face ouverte, une surface arrière (BP) faisant face à la face ouverte, et des plaques latérales agencées verticalement autour de la surface arrière (BP) ; et
un bac de récupération (35, 87) qui est disposé sur un côté de la face ouverte du boîtier interne (20, 20A), et
**caractérisé en ce que** :
le boîtier interne (20, 20A) a une partie de retenue d'eau du côté du boîtier (17a, 17b) qui présente une forme évidée au niveau de la surface arrière (BP),
la partie de retenue d'eau du côté du boîtier (17a, 17b) est prévue avec un trou de fixation (15) à travers lequel une partie de fixation du côté du composant ou une vis de fixation de composant est insérée et une périphérie externe (15a), dans lequel le trou de fixation (15) pénètre dans la surface arrière (BP), et la périphérie externe (15a) entoure le trou de fixation (15) et fait saillie vers la face ouverte.

2. Ventilateur d'échange de chaleur (110, 110A) selon la revendication 1, dans lequel :
un diamètre interne du trou de fixation (15) diminue progressivement de la surface latérale interne vers une surface latérale externe de la surface arrière (BP), et
la partie de fixation du côté du composant (50a) est une partie de réception de vis cylindrique, et a un diamètre externe diminuant vers son côté d'extrémité qui doit être inséré dans le trou de fixation (15).

3. Ventilateur d'échange de chaleur (110, 110A) selon la revendication 1 ou 2, comprenant en outre :
une partie de décharge d'eau de drainage (29) qui est fixée sur une plaque latérale du boîtier interne (20, 20A) et communique avec l'intérieur du boîtier interne (20, 20A).

4. Ventilateur d'échange de chaleur (110, 110A) selon l'une quelconque des revendications 1 à 3,
dans lequel chacun parmi le ventilateur d'alimentation en air (50) et le ventilateur de décharge d'air (60) est un ventilateur de type entraîné par moteur, et
dans lequel chacun parmi un moteur du ventilateur d'alimentation en air (50) et un moteur du ventilateur de décharge d'air (60) est espacé à la fois du boîtier interne (20, 20A) et du bac de récupération (35, 87).
